# EUROPEAN PATENT SPECIFICATION

(11) **EP 4 325 748 B1**
(45) Date of publication and mention of the grant of the patent: **31.12.2025**
(21) Application number: 22803814.7
(22) Date of filing: 09.05.2022
(51) Int. Cl.: H01Q 3/24, H04B 17/00, H04B 17/11

(54) **RADIO FREQUENCY SIGNAL INTERNAL CALIBRATION SYSTEM AND PHASED ARRAY ANTENNA**
SYSTEM ZUR INTERNEN KALIBRIERUNG EINES FUNKFREQUENZSIGNALS UND PHASENGESTEUERTE GRUPPENANTENNE
SYSTÈME D'ÉTALONNAGE INTERNE DE SIGNAL RADIOFRÉQUENCE ET ANTENNE RÉSEAU À COMMANDE DE PHASE

(30) Priority: 20.05.2021 CN 202110549314
(43) Date of publication of application: 21.02.2024
(73) Proprietor: Chengdu T-Ray Technology Co., Ltd., Chengdu, Sichuan 610002 (CN)
(72) Inventor: LIU, Huiqi, Chengdu, Sichuan 610002 (CN); CHEN, Zhihui, Chengdu, Sichuan 610002 (CN); ZHAO, Guohua, Chengdu, Sichuan 610002 (CN); GU, Bin, Chengdu, Sichuan 610002 (CN)
(74) Representative: Ciallié, Giorgio
(86) International application number: PCT/CN2022/091732
(87) International publication number: WO 2022/242492

(56) References cited:
- EP-A1- 3 309 980
- WO-A1-2020/006748
- CN-A- 105 390 814
- CN-A- 107 959 533
- CN-A- 111 276 812
- CN-A- 112 994 808
- CN-U- 212 626 071
- FR-A1- 2 960 100
- US-A1- 2017 077 602
- P UHLIG ET AL: "A Digital Beam-Forming Antenna Module for a Mobile Multimedia Terminal in LTCC-Multilayer Technique", 15TH EUROPEAN MICROELECTRONICS AND PACKAGING CONFERENCE (IMAPS), 30 June 2015 (2015-06-30), pages 467 - 470, XP055435239

## Description

### FIELD OF THE DISCLOSURE

The present disclosure relates to the field of communications, and in particular, to a radio frequency signal internal calibration system and a phased array antenna.

### BACKGROUND OF THE DISCLOSURE

Flat-panel phased arrays enjoy numerous advantages such as flexible beam conversion, rapid scan switching, high reliability and light weight. In recent years, flat-panel phased arrays have been widely used in various types of civil communication systems and a variety of radar systems. Due to the complex structure of a phased array system and the large number of components, amplitude-phase characteristics of active radio frequency channels will change following prolonged use or storage, resulting in deterioration of the entire antenna. Therefore, flat-panel phased arrays need to be calibrated during operation to correct the amplitude-phase information.

Current calibration methods typically employ near-field or far-field calibration, which poses certain challenges for working products. Frequently the technical conditions for near-field or far-field calibration are not available on site, and the near-field or far-field calibration is generally more time-consuming, labor-intensive, and expensive, which is not conducive to the maintenance of the products. Prior art systems and methods are known from CN105390814A, FR2960100A1 and P UHLIG ET AL: "A Digital Beam-Forming Antenna Module for a Mobile Multimedia Terminal in LTCC-Multilayer Technique", 15TH EUROPEAN MICROELECTRONICS AND PACKAGING CONFERENCE (IMAPS), 30 June 2015, pages 467-470, XP055435239. CN105390814A discloses that the thermocompression bonding technology of the multi-layer stripline printed board, which is integrated with the antenna array and the feeding transmission line, and the internal calibration network is enclosed in the interlayer of the multi-layer stripline printed board. FR2960100A1 discloses that a calibrating unit calibrating the antenna includes an electromagnetic connector coupled with the printed block by proximity. The connector excites the radiating element with a polarization, same a the polarization obtained by the nominal excitation, toward each element to be calibrated. XP055435239 discloses that the design of a microstrip patch antenna, to achieve the dual polarization by using a ground plane, having a square backed cavity in order to increase and achieve the bandwidth with good isolation, is proposed.

### SUMMARY OF THE DISCLOSURE

It is an object of the present disclosure to provide a radio frequency signal internal calibration system and a phased array antenna to at least partially alleviate the issues mentioned above.

In order to attain the object above, the technical solutions employed in the embodiments of the present disclosure are as follows.

According to a first aspect, an embodiment of the present disclosure provides a radio frequency signal internal calibration system, comprising: a radio frequency feed layer, a coupling layer, a synthesis layer, and a processing system, the coupling layer being disposed between the radio frequency feed layer and the synthesis layer.

The radio frequency feed layer is provided with a plurality of output feeders, each output feeder being configured to output a signal to an antenna unit.

The synthesis layer is provided with a signal collection network, the signal collection network being configured to collect the coupling signals from the corresponding output feeders, to synthesize the collected coupling signals to obtain a calibration signal, and to transmit the calibration signal to the processing system.

The processing system is configured to determine whether calibration needs to be performed based on the calibration signal.

According to the invention, at least one set of chips is provided on a first side of the radio frequency feed layer, said at least one set of chips comprising one radio frequency signal input port and at least two radio frequency signal output ports, each radio frequency signal output port is configured for connection with a corresponding antenna unit via a respective output feeder, the first side of the radio frequency feed layer being a side of the radio frequency feed layer away from the coupling layer, the radio frequency signal input port being connected to the processing system.

The coupling layer is provided with coupling holes, the number of the coupling holes being the same as the number of radio frequency signal output ports, the coupling holes being respectively located directly below a respective one of first output feeders, the first output feeders being output feeders connected to the radio frequency signal output ports and located on the first side of the radio frequency feed layer.

The signal collection network comprises a plurality of signal collection lines and a synthesis unit, the number of signal collection lines being the same as the number of radio frequency signal output ports, the signal collection lines being located directly below respective coupling holes, the signal collection lines being parallel to respective first output feeders, the signal collection lines each being connected to the synthesis unit, an output port of the synthesis unit serving as a calibration signal output port, the calibration signal output port being connected to the processing system.

Each of the signal collection lines is configured to collect a coupling signal from a respective first output feeders and transmit the collected coupling signals to the synthesis unit;
The synthesis unit is configured to synthesize the received coupling signals to obtain a calibration signal, and transmit the calibration signal to the processing system via the calibration signal output port.

In a possible implementation, the radio frequency feed layer, the coupling layer and the synthesis layer are monolithically integrated.

In a possible implementation, the first side of the radio frequency feed layer is provided with N sets of chips, radio frequency signal input ports of the N sets of chips are respectively connected to output ends of a 1-to-N splitter, and an input end of the 1-to-N splitter is connected to the processing system, where N is an integer multiple of 2.

In a possible implementation, each of the set of chips comprises 4 radio frequency signal output ports.

In a possible implementation, the synthesis unit comprises N 4-way synthesizers and one N-in-1 synthesizer, four signal collection lines of a same set being respectively connected to different input ends of a corresponding 4-way synthesizer, output ends of the N 4-way synthesizers being connected to different input ends of the N-in-1 synthesizer, an output end of the N-in-1 synthesizer serving as the calibration signal output port, and the four signal collection lines of a same set are four signal collection lines of a same chip to which corresponding first output feeders are connected.

In a possible implementation, the signal collection lines have a same length and width as the corresponding first output feeders.

In a possible implementation, a length of the coupling holes is the same as a length of the first output feeders, and a width of the coupling holes is preset to be proportional to a width of the first output feeders.

In a possible implementation, the radio frequency signal output ports are connected to corresponding antenna units via corresponding first output feeders and second output feeders passing through vertical holes.

According to a second aspect, an embodiment of the present disclosure provides a phased array antenna, the phased array antenna comprising a radio frequency signal internal calibration system as described above.

Relative to the prior art, embodiments of the present disclosure provide a radio frequency signal internal calibration system and a phased array antenna, the radio frequency signal internal calibration system comprising: a radio frequency feed layer, a coupling layer, a synthesis layer, and a processing system, wherein the coupling layer is disposed between the radio frequency feed layer and the synthesis layer, wherein the radio frequency feed layer is provided with an output feeder for outputting a signal to the antenna unit, wherein the synthesis layer is provided with a signal collection network, which is configured to collect in real time coupling signals from the corresponding output feeders, synthesize the collected coupling signals to obtain a calibration signal, and transmit the calibration signal to the processing system, and wherein the processing system is configured to determine whether calibration needs to be performed based on the calibration signal. The radio frequency signal internal calibration system provided by the present disclosure can achieve internal calibration in real time, which is easier to implement, less costly, less time-consuming and less labor-intensive, as compared to the far-field or near-field external calibration.

In order to make the above objects, features and advantages of the present disclosure more apparent, preferred embodiments are exemplified below, and are described in detail as follows in conjunction with the accompanying drawings.

### BRIEF DESCRIPTION OF THE DRAWINGS

In order to more clearly illustrate the technical solutions of the embodiments of the present disclosure, the accompanying drawings to be used in the embodiments will be briefly introduced below. It should be understood that the following figures are only illustrative of certain embodiments of the present disclosure. For those skilled in the art, other related drawings could also be obtained from these drawings without exercise of any ingenuity.
FIG. 1 is a schematic diagram of a structure of a radio frequency signal internal calibration system according to an embodiment of the present disclosure;
FIG. 2 shows schematically connection of a radio frequency signal internal calibration system according to an embodiment of the present disclosure;
FIG. 3a shows schematically a structure of a radio frequency feed layer according to an embodiment of the present disclosure;
FIG. 3b shows schematically a structure of a coupling layer according to an embodiment of the present disclosure;
FIG. 3c shows schematically a structure of a synthesis layer according to an embodiment of the present disclosure;
FIG. 4 is another schematic diagram of a structure of a radio frequency signal internal calibration system according to an embodiment of the present disclosure; and
FIG. 5 shows schematically a structure of a phased array antenna according to an embodiment of the present disclosure.

Reference numbers in the figures include: 10-radio frequency feed layer; 101-chip; 102-first output feeder; 103-vertical hole; 20-coupling layer; 201-coupling hole; 30-synthesis layer; 301-signal collection network; 301A-signal collection line; 301B-synthesis unit; 301B1-4-way synthesizer; 301B2-N-in-1 synthesizer; 40-processing system; 50-Antenna unit.

### DETAILED IMPLEMENTATION OF THE DISCLOSURE

In order to make the objects, technical solutions and advantages of the embodiments of the present disclosure clearer, the technical solutions in the embodiments of the present disclosure will be clearly and completely described below in conjunction with the accompanying drawings. Apparently, the embodiments described herein are some, but not all, embodiments of the present disclosure. The components in the embodiments of the present disclosure described and illustrated herein may generally be arranged and designed in a variety of different configurations.

Accordingly, the following detailed description of the embodiments of the present disclosure as provided in the accompanying drawings is not intended to limit the scope of the present disclosure, but merely to indicate selected embodiments of the present disclosure.

It should be noted that like reference numerals and letters refer to like items in the following figures, and thus, once an item is defined in one figure, it need not be further defined and explained in subsequent ones. Moreover, the terms "first", "second" and the like are herein used solely to distinguish one from another and are not to be construed as indicating or implying relative importance.

It is to be noted that relational terms such as first and second herein are used only to distinguish one entity or operation from another, and do not necessarily require or imply any such actual relationship or order between those entities or operations. Furthermore, the terms "including", "comprising", or any other variant thereof, are intended to cover non-exclusive inclusion, such that a process, method, article, or apparatus comprising a set of elements includes not only those elements, but also other elements not expressly listed, or elements that are inherent to such process, method, article or apparatus. Without further limitation, the fact that an element is defined by the phrase "comprising a ......" does not preclude the existence of additional identical elements in the process, method, article or apparatus that comprises the element.

In the description of the present disclosure, it should be noted that an orientation or a positional relationship indicated by such terms as "upper", "lower", "inner" and "outer", if any, is based on that shown in the drawings, or that of the product of the present disclosure as it is in use. This is only for ease and simplicity of description, without indicating or implying that the device or the element referred to must have a specific orientation, or be constructed and operated in a particular orientation, and thus it should not be construed as limiting to the present disclosure.

In the description of the present disclosure, it should also be noted that, unless otherwise expressly specified or defined, the terms "provided" and "connected" and the like are to be understood in a broad sense. For example, it may be a fixed connection, a detachable connection, or an integral connection; it may be a mechanical connection or an electrical connection; it may be a direct connection, or an indirect connection through an intermediary, or an internal communication of two elements. For a person of ordinary skill in the art, the specific meanings of these terms in the present disclosure may be understood in specific contexts.

Some embodiments of the present disclosure are described in detail below in conjunction with the accompanying drawings. The following embodiments and features therein may be combined with each other in the absence of conflicts.

Current calibration methods typically employ near-field or far-field calibration, which poses certain challenges for working products. Frequently the technical conditions for near-field or far-field calibration are not available on site, and the near-field or far-field calibration is generally more time-consuming, labor-intensive, and expensive, which is not conducive to the maintenance of the products.

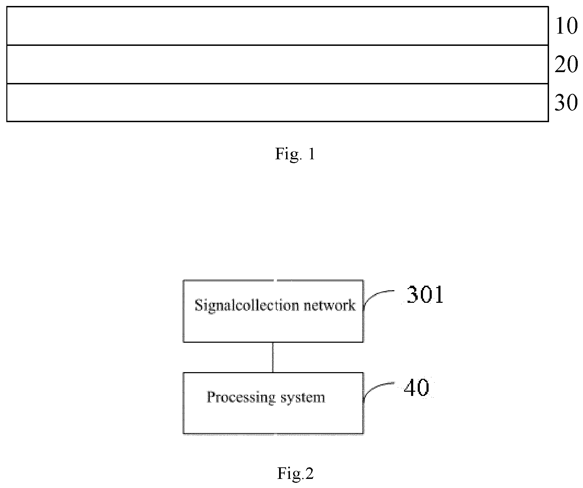

To address the above issues, an embodiment of the present disclosure proposes a radio frequency signal internal calibration system. As shown in FIG. 1, the radio frequency signal internal calibration system includes: a radio frequency feed layer 10, a coupling layer 20, a synthesis layer 30, and a processing system 40, with the coupling layer 20 disposed between the radio frequency feed layer 10 and the synthesis layer 30.

The radio frequency feed layer 10 is provided with an output feeder for outputting a signal to an antenna unit 50.

The synthesis layer 30 is provided with a signal collection network 301, and the signal collection network 301 is configured to collect coupling signals from corresponding output feeders, synthesize the collected coupling signals to obtain a calibration signal, and transmit the calibration signal to the processing system 40.

As shown in FIG. 2, the signal collection network 301 is communicatively connected to the processing system 40.

The processing system 40 is configured to determine whether calibration needs to be performed based on the calibration signal.

In summary, embodiments of the present disclosure provide a radio frequency signal internal calibration system, the radio frequency signal internal calibration system comprising: a radio frequency feed layer, a coupling layer, a synthesis layer, and a processing system; the coupling layer being disposed between the radio frequency feed layer and the synthesis layer; the radio frequency feed layer being provided with an output feeder for outputting a signal to an antenna unit; the synthesis layer being provided with a signal collection network, which is configured to collect in real time coupling signals from corresponding output feeders, synthesize the collected coupling signals to obtain a calibration signal, and transmit the calibration signal to the processing system; and the processing system is configured to determine whether calibration needs to be performed based on the calibration signal. The radio frequency signal internal calibration system provided by the present disclosure can achieve internal calibration in real time, which is easier to implement, less costly, less time-consuming and less labor-intensive, as compared to the far-field or near-field external calibration.

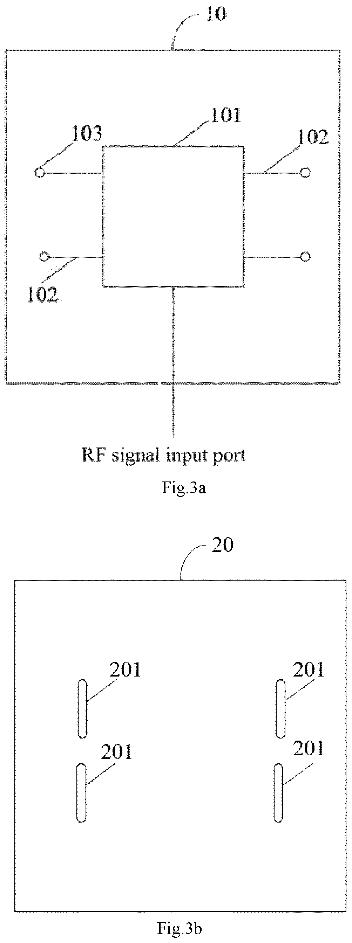

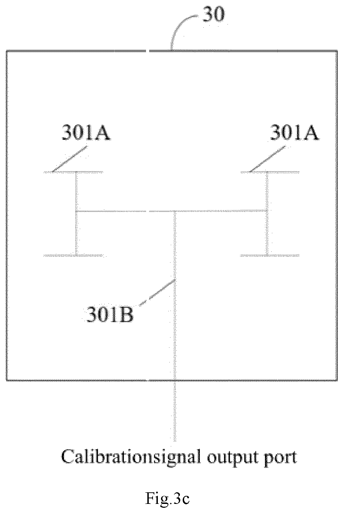

Referring to FIGS. 3a, 3b, and 3c on the basis of FIG. 1, embodiments of the present disclosure further provide possible structures of the radio frequency feed layer 10, the coupling layer 20, and the synthesis layer 30.

As shown in FIG. 3a, at least one set of chips 101 is provided on a first side of the radio frequency feed layer 10, the chip 101 comprising one radio frequency signal input port and at least two radio frequency signal output ports, each of the radio frequency signal output ports being connected to a corresponding antenna unit 50 via a different output feeder, the first side of the radio frequency feed layer 10 being a side of the radio frequency feed layer 10 away from the coupling layer 20, and the radio frequency signal input port is connected to the processing system 40.

Optionally, the chip 101 may implement signal distribution, distributing input signals from the radio frequency signal input port, perform amplitude and phase modulation of the distributed signals within the chip 101, and output the modulated signals to a corresponding antenna unit 50 via the radio frequency signal output ports.

As shown in FIG. 3b, the coupling layer 20 is provided with coupling holes 201, the number of coupling holes 201 being the same as the number of radio frequency signal output ports, the coupling holes 201 being each located directly below different first output feeders 102, the first output feeders 102 being output feeders that are coupled to the radio frequency signal output ports and located on the first side of the radio frequency feed layer 10.

As shown in FIG. 3c, the signal collection network 301 includes signal collection lines 301A and a synthesis unit 301B, the number of the signal collection lines 301A being the same as the number of the radio frequency signal output ports, the signal collection lines 301A being respectively located below different coupling holes 201, the signal collection lines 301A being respectively parallel to the corresponding first output feeders 102, and each of the signal collection lines 301A is connected to the synthesis unit 301B. An output port of the synthesis unit 301B serves as a calibration signal output port, and the calibration signal output port is connected to the processing system 40.

The signal collection lines 301A are configured to collect coupling signals from the first output feeders 102 and transmit the collected coupling signals to the synthesis unit 301B.

The synthesis unit 301B is configured to synthesize the received coupling signals to obtain a calibration signal and transmit the calibration signal to the processing system 40 via the calibration signal output port.

It should be noted that the number of radio frequency signal output ports is equal to the number of first output feeders 102, the number of coupling holes 201 is the same as the number of radio frequency signal output ports, and the number of signal collection lines 301A is the same as the number of radio frequency signal output ports, i.e., the number of the two is the same as the number of first output feeders 102.

In a possible implementation, the radio frequency feed layer 10, the coupling layer 20, and the synthesis layer 30 are integrated monolithically. Optionally, the monolithic integration is achieved through a radio frequency multilayer board, such as Rogers 4350. A process using monolithic integration provides better effects of integration.

In a possible implementation, N sets of chips are provided on the first side of the radio frequency feed layer 10, radio frequency signal input ports of the N sets of chips are respectively connected to output ends of a 1-to-N splitter, and an input end of the 1-to-N splitter is connected to the processing system, where N is an integer multiple of 2. Optionally, N is 4.

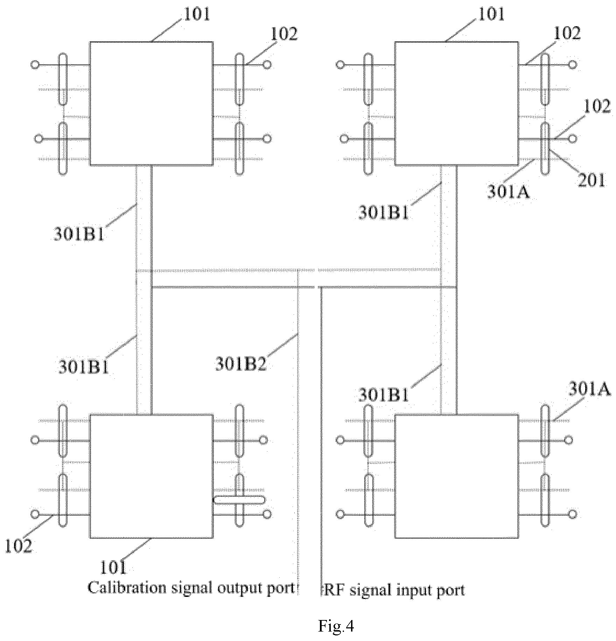

Referring to FIG. 4, in a possible implementation, the chip 101 includes four radio frequency signal output ports, and the four radio frequency signal output ports are respectively connected to four antenna units 50.

Still referring to FIG. 4, the synthesis unit 301B includes N 4-way synthesizers 301B1 and one N-in-1 synthesizer 301B2, four signal collection lines 301A of a same se tare respectively connected to different input ends of the corresponding 4-way synthesizers 301B1, and output ends of the N 4-way synthesizers 301B1 are connected to different input ends of the N-in-1 synthesizer 301B2. An output end of the N-in-1 synthesizer 301B2 serves as a calibration signal output port, and the four signal collection lines 301A of a same set are four signal collection lines of a same chip 101 to which the corresponding first output feeders102 are connected.

In a possible implementation, the signal collection lines 301A have a same length and width as the corresponding first output feeders 102.

In a possible implementation, the length of the coupling holes 201 is the same as the length of the first output feeders 102, and the width of the coupling holes 201 is preset to be proportional to the width of the first output feeders 102.

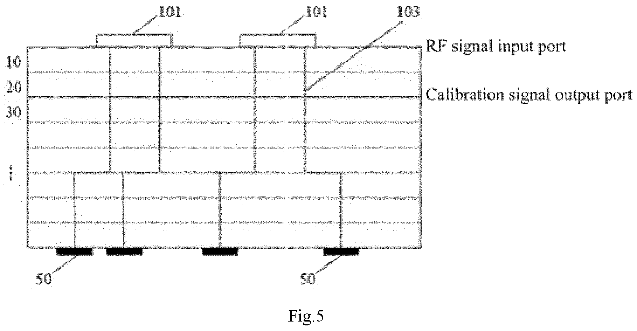

Referring to FIG. 5, in a possible implementation, the radio frequency signal output ports of the chips 101 are connected to corresponding antenna units 50 via corresponding first output feeders 102 and second output feeders passing through vertical holes 103.

The radio frequency signal internal calibration system provided in the embodiments of the present disclosure takes low-cost radio frequency boards as a carrier, and enables a complex internal calibration network through a multilayer board lamination process using a layer of coupling slotted structure (the coupling holes 201 in the coupling layer 20) and a layer of synthesis network (the signal collection network 301 in the synthesis layer 30). It has some advantages for the implementation of internal calibration of flat-panel phased array antennas. Firstly, the structure is small in size. A flat-panel phased array antenna is typically realized through a multilayer board lamination process, and newly adding an internal calibration network will typically result in increased complexities or processing difficulties, which is not conducive to the realization of the entire antenna. The embodiments of the present disclosure are carried out using a two-layer structure, which will not excessively increase the thickness and size of the structure, and is thus applicable to the implementation of communication solutions. Accordingly, it enables a relatively good control of the overall cost. Secondly, it has lower impacts on the original implementing architecture. The addition of an internal calibration network has lower impacts on the original radio frequency signal layer, and will not excessively deteriorate its power. By adjusting the slot size of the coupling holes 201, precise coupling amount control may be achieved, integration may be realized using a well-established multilayer board process, and it also achieves good consistency control among multiple channels. The radio frequency signal internal calibration system provided by embodiments of the present disclosure is primarily implemented at the internal calibration network of a flat-panel antenna, and by utilizing monolithic integration and a coupling slotted structure; it minimizes the influences on the original flat-panel antenna while having the advantage of higher integration.

An embodiment of the present disclosure further provides a phased array antenna comprising an above-described radio frequency signal internal calibration system. The structure of the phased array antenna is as shown in FIG. 5.

It is to be noted that the phased array antenna according to the embodiment of the present disclosure includes the radio frequency signal internal calibration system in the foregoing embodiments, so that the phased array antenna may achieve the technical effects corresponding to the radio frequency signal internal calibration system in the foregoing embodiments. For the sake of brevity, reference may be made to the above disclosure for whatever is not mentioned in this embodiment.

The processing system in the embodiments of the present disclosure may be an integrated circuit chip with signal processing capabilities. The processing system described above may be a general-purpose processor, including a Central Processing Unit (CPU), a Network Processor (NP), etc.; it may also be a Digital Signal Processor (DSP), an Application Specific Integrated Circuit (ASIC), a Field-Programmable Gate Array (FPGA), as well as other programmable logic devices, discrete gate or transistor logic devices, or discrete hardware components.

The foregoing are only preferred embodiments of the present disclosure, which are not intended to limit the present disclosure but are subject to various modifications or changes for those skilled in the art.

## Claims

1. A radio frequency signal internal calibration system, comprising: a radio frequency feed layer (10), a coupling layer (20), a synthesis layer (30), and a processing system (40), the coupling layer (20) being disposed between the radio frequency feed layer (10) and the synthesis layer (30),
wherein the radio frequency feed layer (10) is provided with a plurality of output feeders, each output feeder being configured to output a signal to a respective antenna unit (50);
wherein the synthesis layer (30) is provided with a signal collection network (301) configured to collect the coupling signals from the corresponding output feeders, to synthesize the collected coupling signals to obtain a calibration signal, and to transmit the calibration signal to the processing system (40);
wherein the processing system (40) is configured to determine whether calibration needs to be performed based on the calibration signal;
wherein at least one set of chips (101) is provided on a first side of the radio frequency feed layer (10), said at least one set of chips comprising one radio frequency signal input port and at least two radio frequency signal output ports, each radio frequency signal output port is configured for connection with a corresponding antenna unit (50) via a respective output feeder, the first side of the radio frequency feed layer (10) being a side of the radio frequency feed layer (10) away from the coupling layer (20), the radio frequency signal input port being connected to the processing system (40);
wherein the coupling layer (20) is provided with coupling holes (201), the number of the coupling holes (201) being the same as the number of radio frequency signal output ports, each of the coupling holes (201) being respectively located directly below a respective one of first output feeders (102), the first output feeders (102) being output feeders connected to the radio frequency signal output ports and located on the first side of the radio frequency feed layer (10);
wherein the signal collection network (301) comprises a plurality of signal collection lines (301A) and a synthesis unit (301B), the number of signal collection lines (301A) being the same as the number of radio frequency signal output ports, the signal collection lines (301A) being located directly below respective coupling holes (201), the signal collection lines being parallel to respective first output feeders (102), the signal collection lines (301A) each being connected to the synthesis unit (301B), an output port of the synthesis unit (301B) serving as a calibration signal output port, the calibration signal output port being connected to the processing system (40);
wherein each of the signal collection lines (301A) is configured to collect a coupling signal from a respective first output feeder (102) and transmit the collected coupling signal to the synthesis unit (301B); and
wherein the synthesis unit (301B) is configured to synthesize the received coupling signals to obtain a calibration signal, and transmit the calibration signal to the processing system (40) via the calibration signal output port.

2. The radio frequency signal internal calibration system according to claim 1, wherein the radio frequency feed layer (10), the coupling layer (20) and the synthesis layer (30) are monolithically integrated.

3. The radio frequency signal internal calibration system according to claim 1, wherein the first side of the radio frequency feed layer (10) is provided with N sets of chips (101), radio frequency signal input ports of the N sets of chips (101) being respectively connected to output ends of a 1-to-N splitter, an input end of the 1-to-N splitter being connected to the processing system (40), where N is an integer multiple of 2.

4. The radio frequency signal internal calibration system according to claim 3, wherein each of the set of chips (101) comprises 4 radio frequency signal output ports.

5. The radio frequency signal internal calibration system according to claim 4, wherein the synthesis unit (301B) comprises N 4-way synthesizers (301B1) and one N-in-1 synthesizer (301B2), four signal collection lines (301A) of a same set being respectively connected to different input ends of a corresponding 4-way synthesizer (301B1), output ends of the N 4-way synthesizers (301B1) being connected to different input ends of the N-in-1 synthesizer (301B2), an output end of the N-in-1 synthesizer (301B2) serving as the calibration signal output port, and wherein the four signal collection lines (301A) of a same set are four signal collection lines of a same chip (101) to which corresponding first output feeders (102) are connected.

6. The radio frequency signal internal calibration system according to claim 1, wherein the signal collection lines (301A) have a same length and width as the corresponding first output feeders (102).

7. The radio frequency signal internal calibration system according to claim 6, wherein a length of the coupling holes (201) is the same as a length of the first output feeders (102), and wherein a width of the coupling holes (201) is preset to be proportional to a width of the first output feeders (102).

8. The radio frequency signal internal calibration system according to claim 1, wherein the radio frequency signal output ports are connected to corresponding antenna units (50) via corresponding first output feeders (102) and second output feeders passing through vertical holes (103).

9. A phased array antenna comprising a radio frequency signal internal calibration system according to any one of claims 1 to 8.

## Patentansprüche

1. Kalibriersystem für Hochfrequenzsignale, umfassend: eine Hochfrequenz-Einspeiseschicht (10), eine Kopplungsschicht (20), eine Syntheseschicht (30) und ein Verarbeitungssystem (40), wobei die Kopplungsschicht (20) zwischen der Hochfrequenz-Einspeiseschicht (10) und der Syntheseschicht (30) angeordnet ist,
wobei die Hochfrequenz-Einspeiseschicht (10) mit einer Vielzahl von Ausgangsspeiseleitungen versehen ist, wobei jede Ausgangsspeiseleitung konfiguriert ist, um ein Signal an einer jeweiligen Antenneneinheit (50) auszugeben;
**wobei** die Syntheseschicht (30) mit einem Signalerfassungsnetzwerk (301) versehen ist, das konfiguriert ist, die Kopplungssignale von den jeweiligen Ausgangsspeiseleitungen zu sammeln, die gesammelten Kopplungssignale zu synthetisieren, um ein Kalibriersignal zu erhalten, und das Kalibriersignal an das Verarbeitungssystem (40) zu übertragen;
**wobei** das Verarbeitungssystem (40) konfiguriert ist, auf der Grundlage des Kalibriersignals zu bestimmen, ob eine Kalibrierung durchgeführt werden muss;
**wobei** auf einer ersten Seite der Hochfrequenz-Einspeiseschicht (10) mindestens ein Satz von Chips (101) vorgesehen ist, wobei der mindestens eine Satz von Chips einen Hochfrequenzsignal-Eingangsport und mindestens zwei Hochfrequenzsignal-Ausgangsports aufweist, wobei jeder Hochfrequenzsignal-Ausgangsport für eine Verbindung mit einer entsprechenden Antenneneinheit (50) über eine jeweilige Ausgangsspeiseleitung konfiguriert ist, wobei die erste Seite der Hochfrequenz-Einspeiseschicht (10) eine Seite der Hochfrequenz-Einspeiseschicht (10) ist, die von der Kopplungsschicht (20) abgewandt ist; und wobei der Hochfrequenzsignal-Eingangsport mit dem Verarbeitungssystem (40) verbunden ist;
**wobei** die Kopplungsschicht (20) mit Kopplungsöffnungen (201) versehen ist, wobei die Anzahl der Kopplungsöffnungen (201) gleich der Anzahl der Hochfrequenzsignal-Ausgangsports ist, wobei sich jede der Kopplungsöffnungen (201) jeweils direkt unter einer jeweiligen ersten Ausgangsspeiseleitung (102) befindet, wobei die ersten Ausgangsspeiseleitungen (102) Ausgangsspeiseleitungen sind, die mit den Hochfrequenzsignal-Ausgangsports verbunden und auf der ersten Seite der Hochfrequenz-Einspeiseschicht (10) angeordnet sind;
**wobei** das Signalerfassungsnetzwerk (301) eine Vielzahl von Signalerfassungsleitungen (301A) und eine Syntheseeinheit (301B) umfasst, wobei die Anzahl der Signalerfassungsleitungen (301A) gleich der Anzahl der Hochfrequenzsignal-Ausgangsports ist, wobei die Signalerfassungsleitungen (301A) direkt unter jeweiligen Kopplungsöffnungen (201) angeordnet sind, wobei die Signalerfassungsleitungen parallel zu jeweiligen ersten Ausgangsspeiseleitungen (102) verlaufen, wobei die Signalerfassungsleitungen (301A) jeweils mit der Syntheseeinheit (301B) verbunden sind, wobei ein Ausgangsport der Syntheseeinheit (301B) als Kalibriersignal-Ausgangsport dient, und wobei der Kalibriersignal-Ausgangsport mit dem Verarbeitungssystem (40) verbunden ist;
**wobei** jede der Signalerfassungsleitungen (301A) konfiguriert ist, ein Kopplungssignal von einer jeweiligen ersten Ausgangsspeiseleitung (102) zu sammeln und das gesammelte Kopplungssignal an die Syntheseeinheit (301B) zu übertragen; und
**wobei** die Syntheseeinheit (301B) konfiguriert ist, die empfangenen Kopplungssignale zu synthetisieren, um ein Kalibriersignal zu erhalten, und das Kalibriersignal über den Kalibriersignal-Ausgangsport an das Verarbeitungssystem (40) zu übertragen.

2. Kalibriersystem für Hochfrequenzsignale nach Anspruch 1, **wobei** die Hochfrequenz-Einspeiseschicht (10), die Kopplungsschicht (20) und die Syntheseschicht (30) monolithisch integriert sind.

3. Kalibriersystem für Hochfrequenzsignale nach Anspruch 1, **wobei** auf der ersten Seite der Hochfrequenz-Einspeiseschicht (10) N Sätze von Chips (101) vorgesehen sind, **wobei** die Hochfrequenzsignal-Eingangsports der N Sätze von Chips (101) jeweils mit Ausgangsenden eines 1-zu-N-Teilers verbunden sind, **wobei** ein Eingangsende des 1-zu-N-Teilers mit dem Verarbeitungssystem (40) verbunden ist, und **wobei** N ein ganzzahliges Vielfaches von 2 ist.

4. Kalibriersystem für Hochfrequenzsignale nach Anspruch 3, **wobei** jeder Satz von Chips (101) 4 Hochfrequenzsignal-Ausgangsports umfasst.

5. Kalibriersystem für Hochfrequenzsignale nach Anspruch 4, wobei die Syntheseeinheit (301B) N 4-Wege-Synthesizer (301B1) und einen N-in-1-Synthesizer (301B2) umfasst, wobei vier Signalerfassungsleitungen (301A) ein und desselben Satzes jeweils mit verschiedenen Eingangsenden eines entsprechenden 4-Wege-Synthesizers (301B1) verbunden sind, **wobei** Ausgangsenden der N 4-Wege-Synthesizer (301B1) mit verschiedenen Eingangsenden des N-in-1-Synthesizers (301B2) verbunden sind, **wobei** ein Ausgangsende des N-in-1-Synthesizers (301B2) als der Kalibriersignal-Ausgangsport dient, und wobei die vier Signalerfassungsleitungen (301A) eines gleichen Satzes vier Signalerfassungsleitungen eines gleichen Chips (101) sind, mit dem entsprechende erste Ausgangsspeiseleitungen (102) verbunden sind.

6. Kalibriersystem für Hochfrequenzsignale nach Anspruch 1, **wobei** die Signalerfassungsleitungen (301A) eine gleiche Länge und Breite wie die entsprechenden ersten Ausgangsspeiseleitungen (102) aufweisen.

7. Kalibriersystem für Hochfrequenzsignale nach Anspruch 6, **wobei** eine Länge der Kopplungsöffnungen (201) gleich einer Länge der ersten Ausgangsspeiseleitungen (102) ist, und **wobei** eine Breite der Kopplungsöffnungen (201) vorgesehen ist, proportional zu einer Breite der ersten Ausgangsspeiseleitungen (102) zu sein.

8. Kalibriersystem für Hochfrequenzsignale nach Anspruch 1, **wobei** die Hochfrequenzsignal-Ausgangsports über entsprechende erste Ausgangsspeiseleitungen (102) und zweite Ausgangsspeiseleitungen, die vertikale Löcher (103) durchlaufen, mit entsprechenden Antenneneinheiten (50) verbunden sind.

9. Phased-Array-Antenne, umfassend ein Kalibriersystem für Hochfrequenzsignale nach einem der Ansprüche 1 bis 8.

## Revendications

1. Système d'étalonnage interne de signaux radiofréquence, comprenant : une couche d'alimentation radiofréquence (10), une couche de couplage (20), une couche de synthèse (30) et un système de traitement (40), la couche de couplage (20) étant disposée entre la couche d'alimentation radiofréquence (10) et la couche de synthèse (30),
**dans lequel** la couche d'alimentation radiofréquence (10) est pourvue d'une pluralité de lignes d'alimentation de sortie, chaque ligne d'alimentation de sortie étant configurée pour délivrer un signal à une respective unité d'antenne (50) ;
**dans lequel** la couche de synthèse (30) est pourvue d'un réseau de collecte de signaux (301) configuré pour collecter les signaux de couplage provenant des lignes d'alimentation de sortie correspondantes, pour synthétiser les signaux de couplage collectés afin d'obtenir un signal d'étalonnage, et pour transmettre le signal d'étalonnage au système de traitement (40) ;
**dans lequel** le système de traitement (40) est configuré pour déterminer si un étalonnage doit être effectué sur la base du signal d'étalonnage ;
**dans lequel** au moins un jeu de puces (101) est prévu sur un premier côté de la couche d'alimentation radiofréquence (10), ledit au moins un jeu de puces comprenant un port d'entrée de signal radiofréquence et au moins deux ports de sortie de signal radiofréquence, chaque port de sortie de signal radiofréquence étant configuré pour être connecté à une unité d'antenne respective (50) via une ligne d'alimentation de sortie respective, le premier côté de la couche d'alimentation radiofréquence (10) étant un côté de la couche d'alimentation radiofréquence (10) opposé à la couche de couplage (20), le port d'entrée de signal radiofréquence étant connecté au système de traitement (40) ;
**dans lequel** la couche de couplage (20) est pourvue de trous de couplage (201), le nombre de trous de couplage (201) étant égal au nombre de ports de sortie de signal radiofréquence, chacun des trous de couplage (201) étant respectivement situé directement sous une respective première ligne d'alimentation de sortie (102), les premières lignes d'alimentation de sortie (102) étant des lignes d'alimentation de sortie connectées aux ports de sortie de signal radiofréquence et situées sur le premier côté de la couche d'alimentation radiofréquence (10) ;
**dans lequel** le réseau de collecte de signaux (301) comprend une pluralité de lignes de collecte de signaux (301A) et une unité de synthèse (301B), le nombre de lignes de collecte de signaux (301A) étant égal au nombre de ports de sortie de signal radiofréquence, les lignes de collecte de signaux (301A) étant situées directement sous des trous de couplage respectifs (201), les lignes de collecte de signaux étant parallèles à des premières lignes d'alimentation de sortie respectives (102), les lignes de collecte de signaux (301A) étant chacune connectée à l'unité de synthèse (301B), un port de sortie de l'unité de synthèse (301B) servant de port de sortie de signal d'étalonnage, le port de sortie de signal d'étalonnage étant connecté au système de traitement (40) ;
**dans lequel** chaque ligne de collecte de signaux (301A) est configurée pour collecter un signal de couplage d'une première ligne d'alimentation de sortie respective (102) et transmettre le signal de couplage collecté à l'unité de synthèse (301B) ; et
**dans lequel** l'unité de synthèse (301B) est configurée pour synthétiser les signaux de couplage reçus afin d'obtenir un signal d'étalonnage, et transmettre le signal d'étalonnage au système de traitement (40) via le port de sortie de signal d'étalonnage.

2. Système d'étalonnage interne de signaux radiofréquence selon la revendication 1, **dans lequel** la couche d'alimentation radiofréquence (10), la couche de couplage (20) et la couche de synthèse (30) sont intégrées de manière monolithique.

3. Système d'étalonnage interne de signaux radiofréquence selon la revendication 1, **dans lequel** N jeux de puces (101) sont prévus sur le premier côté de la couche d'alimentation radiofréquence (10), les ports d'entrée de signal radiofréquence des N jeux de puces (101) étant respectivement connectés aux extrémités de sortie d'un diviseur 1-vers-N, une extrémité d'entrée du diviseur 1-vers-N étant connectée au système de traitement (40), et N étant un multiple entier de 2.

4. Système d'étalonnage interne de signaux radiofréquence selon la revendication 3, **dans lequel** chaque jeu de puces (101) comprend 4 ports de sortie de signal radiofréquence.

5. Système d'étalonnage interne de signaux radiofréquence selon la revendication 4, **dans lequel** l'unité de synthèse (301B) comprend N synthétiseurs 4-voies (301B1) et un synthétiseur N-en-1 (301B2), quatre lignes de collecte de signaux (301A) d'un même jeu étant respectivement connectées à différentes extrémités d'entrée d'un synthétiseur 4-voies correspondant (301B1), les extrémités de sortie des N synthétiseurs 4-voies (301B1) étant connectées à différentes extrémités d'entrée du synthétiseur N-en-1 (301B2), une extrémité de sortie du synthétiseur N-en-1 (301B2) servant de port de sortie de signal d'étalonnage, et **dans lequel** les quatre lignes de collecte de signaux (301A) d'un même jeu sont quatre lignes de collecte de signaux d'une même puce (101) à laquelle sont connectées des premières lignes d'alimentation de sortie correspondantes (102).

6. Système d'étalonnage interne de signaux radiofréquence selon la revendication 1, **dans lequel** les lignes de collecte de signaux (301A) présentent une même longueur et une même largeur que les premières lignes d'alimentation de sortie correspondantes (102).

7. Système d'étalonnage interne de signaux radiofréquence selon la revendication 6, **dans lequel** une longueur des trous de couplage (201) est égale à une longueur des premières lignes d'alimentation de sortie (102), et **dans lequel** une largeur des trous de couplage (201) est prédéfinie pour être proportionnelle à une largeur des premières lignes d'alimentation de sortie (102).

8. Système d'étalonnage interne de signaux radiofréquence selon la revendication 1, **dans lequel** les ports de sortie de signal radiofréquence sont connectés à des unités d'antenne correspondantes (50) via des premières lignes d'alimentation de sortie correspondantes (102) et des deuxièmes lignes d'alimentation de sortie traversant des trous verticaux (103).

9. Antenne réseau phasé, comprenant un système d'étalonnage interne de signaux radiofréquence selon l'une quelconque des revendications 1 à 8.
